# EUROPEAN PATENT APPLICATION

(11) **EP 1 221 747 A2**
(43) Date of publication of application: **10.07.2002**
(21) Application number: 01112513.5
(22) Date of filing: 23.05.2001
(51) Int. Cl.: H01S 3/067

(54) **Wide-waveband optical waveguide amplifier and method for the manufacture thereof**

(30) Priority: 05.01.2001 KR 2001000654
(71) Applicant: Postech Foundation, Pohang-shi, Kyungsangbuk-do 790-784 (KR)
(72) Inventor: Heo, Jong, c/oDept.of Mat.,Science and Eng.POSTECH, Pohang-shi, Kyungsangbuk-do (KR); Park, Se Ho, c/oDept.of Mat.,Science,Eng.,POSTECH, Pohang-shi, Kyungsangbuk-do (KR); Seo, Young Beom, c/oDept.Mat.,Science+Eng.POSTECH, Pohang-shi, Kyungsangbuk-do (KR)
(74) Representative: Lorenz, Werner, Dr.-Ing.

(57) **Abstract**

A wide-waveband optical waveguide amplifier having rare earth ions and an optical medium for containing the rare earth ions is provided by using a electrical poling technique. By applying a predetermined voltage to an optical channel of the optical meduim in the direction normal to the optical path for a predetermined time while maintaining a predetermined temperature, the optical medium turns to be poled so that a waveband width of a fluorescent spectrum of the rare earth ions may be expanded.

## Description

The present invention relates to a wide-waveband optical waveguide amplifier and a method for the manufacture thereof; and, more particularly, to a wide-waveband optical waveguide amplifier containing rare earth ions and a method for the manufacture thereof through an electrical poling technique.

In long distance optical telecommunications, the intensity of a signal beam may be reduced by an absorption loss intrinsic to the optical fiber and therefore the signal beam should be amplified at every predetermined distance interval. For example, if an excited beam is introduced together with the signal beam into an optical fiber containing rare earth ions, the rare earth ions will be excited and a fluorescence of a same wavelength and phase as those of the signal beam will be emitted by the excited rare earth ions to thereby amplify the signal beam. The waveband in which a signal beam can be amplified by an optical fiber depends on the rare earth elements within the optical fiber. The optical fiber containing Er³⁺ is widely used to amplify the signal beam of a wavelength of 1.55 µm. A wavelength division multiplexing transmission technique in which a signal beam is transmitted through a plurality of channels may be used to dramatically increase the transmission rate of the optical fiber.

However, the optical fiber containing Er³⁺ ions has a narrow bandwidth from width in which a uniform optical gain can be obtained and therefore draws a large fluctuation in the channel gain even by a small shift in the wavelength so that the number of available channels are limited. Accordingly, in order to reduce the variations in the channel gain over the wavelength and increase the number of available channels, the bandwidth of the fluorescence spectrum obtainable from the Er³⁺ ions needs to be enlarged. The fluorescence spectrum width of the optical fiber of a specified composition such as the tellurite glass is slightly larger than that of silicate type glass. However, the thermal stability and the mechanical stability thereof are very precarious.

It is, therefore, a primary object of the present invention to provide a wide-waveband optical waveguide amplifier to enlarge a waveband width of the fluorescence spectrum emitted from rare earth ions within the wide-waveband optical waveguide amplifier and a method for the manufacture thereof by using an electric poling technique.

It is a secondary object of the present invention to provide a method for enlarging a waveband width of the fluorescence spectrum in order to obtain an optical amplification by using a glass containing rare earth ions to thereby facilitate an optical transmission over dozens of terabits.

In accordance with a first preferred embodiment of the present invention to achieve the above-stated goal, there is provided a wide-waveband optical waveguide amplifier, comprising:
rare earth ions; and
an optical medium for containing the rare earth ions,
wherein the optical medium is electrically poled to expand a waveband width of a fluorescent spectrum of the rare earth ions.

The above and other objects and features of the present invention will become apparent from the following description of preferred embodiments given with conjunction with the accompanying drawings, in which:
Figs. 1A and 1B are an apparatus in which a poling of an Er-doped flat sample may be carried out in accordance with the present invention;
Fig. 2 depicts another apparatus in which a poling of an Er-doped D-type optical fiber may be performed in accordance with the present invention;
Fig. 3 presents still another apparatus in which a poling of a cladding bi-polar fiber may be performed in accordance with the present invention;
Fig. 4 describes a diagram for illustrating energy levels of a rare earth ion Er³⁺;
Fig. 5 demonstrates a diagram for illustrating a broadening mechanism of fluorescence spectrum due to a crystal structure;
Fig. 6 explains a diagram for illustrating the relationship between an external electric field and the Stark levels;
Fig. 7 sets forth graphs for showing temperature and applied voltage profiles drawn as a function of time for use in poling a glass composition or optical fiber including at least one rare element in accordance with the present invention;
Figs. 8A, 8B and 8C describe diagrams for illustrating a poling process induced by the movement of the electric charges in the glass composition or optical fiber in accordance with the present invention;
Fig. 9 provides a diagram for schematically illustrating a fluorescence detecting scheme from the glass sample in accordance with the present invention;
Fig. 10 represents graphs for illustrating fluorescence spectrums from the poled flat sample in accordance with the present invention;
Fig. 11 presents graphs for illustrating fluorescence spectrums from the flat sample which has not been completely poled;
Fig. 12 is graphs for illustrating fluorescence spectrums from the poled flat sample in accordance with the present invention; and
Fig. 13 describes graphs for illustrating fluorescence spectrums from the poled flat sample.
Fig. 14 schematically shows an embodiment of an apparatus for performing optical communications using the wide-band optical waveguide amplifier in accordance with the present invention.

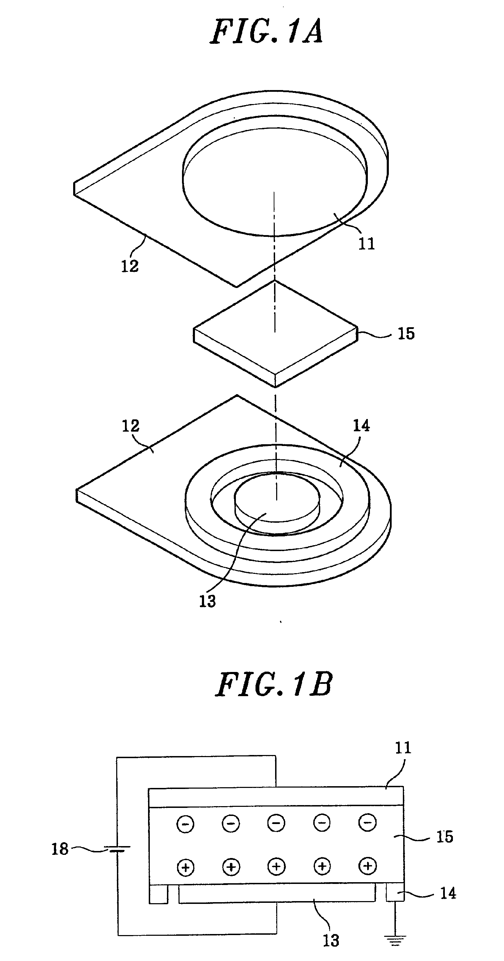

Referring to Figs. 1A and 1B, there is illustrated an apparatus in which a poling of an Er-doped flat sample 15 can be carried out in accordance with the present invention. An upper electrode 11 and a lower electrode 13 made of, e.g., platinum are attached on two facing surfaces of two substrates 12 made of, e.g., alumina, respectively, so that they may be confronted with each other. The upper and the lower electrode 11 and 13 are respectively connected to the anode and the cathode of a power source 18, or vice versa. The sample 15 is located between the upper electrode 11 and the lower electrode 13. A grounded guide ring 14 may be provided around the lower electrode 13 in order to cut off a leakage current which may flow on the surface of the sample 15. A DC power supply may be used as the power source 18 to apply a bias voltage of several kV between the upper electrode 11 and the lower electrode 13. If a surface leakage current is detected during poling, the power source 18 is controlled to apply a bias voltage of less than 95% of a threshold voltage required for the onset of the surface leakage current.

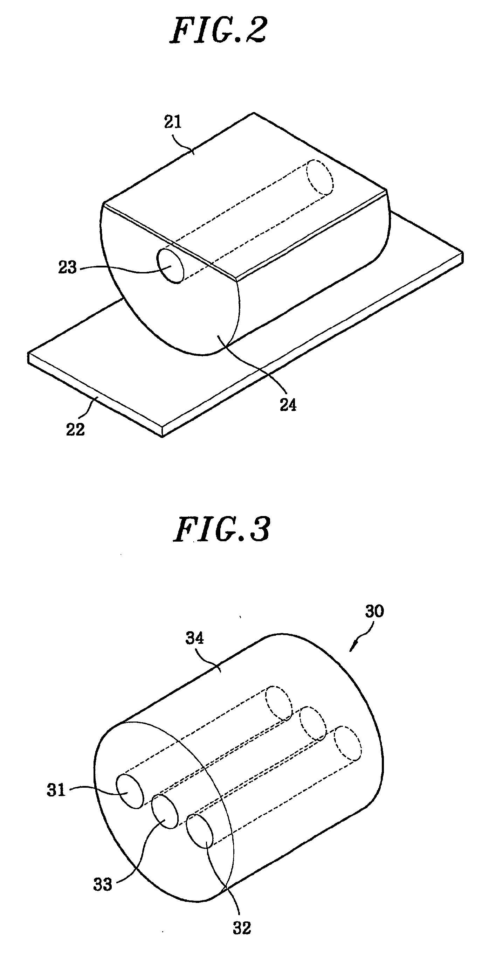

Referring to Fig. 2, there is shown another apparatus in which a poling of an Er-doped D-type optical fiber can be performed in accordance with the present invention, wherein the D-type optical fiber is a side-polished optical fiber. Since an effective poling occurs at the regions close to an electrode, the optical fiber may be side-polished in order to reduce the distance between an electrode and a core 23 of the optical fiber. A cladding layer 24 of a cylindrical optical fiber is polished lengthwise not to expose the core 23 of the cylindrical optical fiber so that the D-type optical fiber with a lengthwise polished surface is formed. A sputtering technique may be used to coat a metal (e.g., platinum) film 21 on the polished surface of the D-type optical fiber to thereby form an upper electrode. After the D-type optical fiber is aligned on a metal (e.g., platinum) plate 22 serving as a lower electrode, a voltage is applied between the metal film 21 and the metal plate 22 so that a strong electric field can be generated within the core 23.

Referring to Fig. 3, there is illustrated a still another apparatus in which a poling of a cladding bi-polar fiber can be performed in accordance with the present invention. Within a cladding surrounding a core of an optical preform, two cylindrical holes are formed lengthwise by using an, e.g., ultrasonic boring technique, wherein two holes are run parallel to and are oppositely located with respect to the core at the center of the preform. The two cylindrical holes are filled with metal (e.g., platinum) lines, respectively. By pulling the perform thus produced, an optical fiber 30 having a cladding layer 34 including therein a core 33 and two metal lines 31 and 32 can be obtained. The electrode lines 31 and 32 are connected to a power supply and a high voltage can be applied therebetween in such a way that the core 33 may be poled. In the fiber 30, the electrode lines 31 and 32 are located close to the core 33 and are not exposed at the surface of the fiber 30. Therefore, a high electric field can be applied without incurring a surface leakage current, thereby enhancing the poling effect.

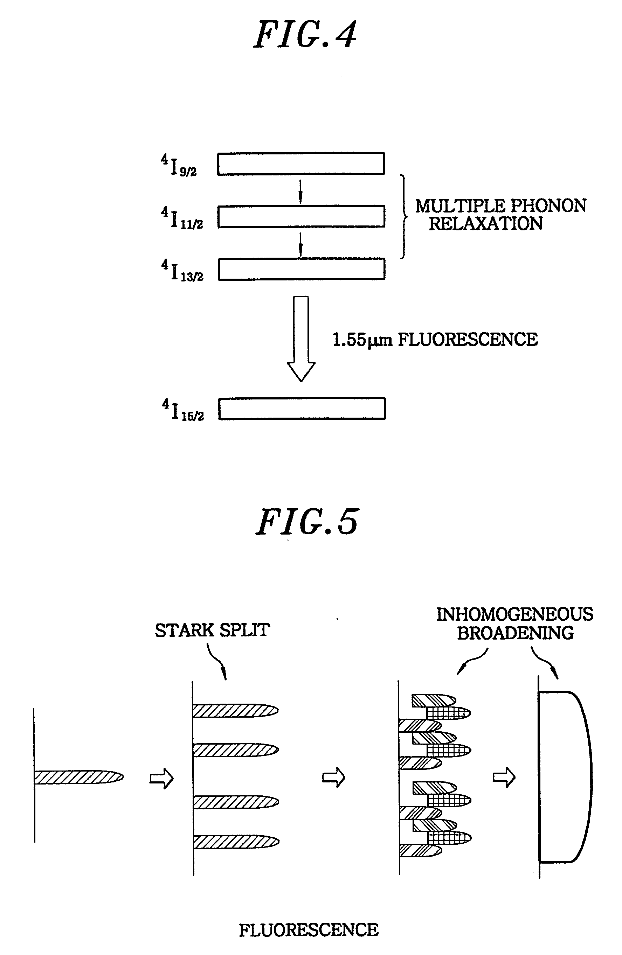

Referring to Fig. 4, there is shown a diagram for illustrating energy levels of Er³⁺ ion. Absorption of optical pumping of 800 nm, 980 nm and 1480 nm excites the rare earth ions Er³⁺ from the ground energy level ⁴I_{15/2} to the excited energy levels of ⁴I_{9/2}, ⁴I_{11/2} and ⁴I_{13/2} levels, respectively. Transitions between the excited energy levels ⁴I_{9/2}, ⁴I_{11/2}, and ⁴I_{13/2} occur through multiple phonon relaxation mechanism. However, the energy transition from the ⁴I_{13/2} level to the ⁴I_{15/2} level is achieved through a fluorescence emission in 1.5 µm waveband. Accordingly, an Er doped optical fiber amplifier using the stimulated emission of Er³⁺ ions may be used in the optical communications using the 1.55 µm waveband.

Generally, three ionized atoms of rare earth elements in the Lanthanide series (⁵⁷La to ⁷¹Lu) are used to amplify the optical signal and activate the laser beam. Since each rare earth ion emits fluorescence with at least one specified wavelength, it may be used to amplify a signal light corresponding to a specified wavelength of an emitted fluorescence. Representatively, Pr³⁺ ion emits fluorescent lights with wavelengths of 1.34 µm (¹G₄→³H₅), 1.50 µm (¹D₂→ ¹G₄) and 1.64 µm (³F₃→³H₄). Nd³⁺ ion emits fluorescent lights with wavelengths of 1.06 µm (⁴F_{3/2}→⁴I_{11/2}), 1.36 µm (⁴F_{3/2}→ ⁴I_{13/2}) and 1.87 µm (⁴F_{3/2}→⁴I_{15/2}). Sm³⁺ ion emits fluorescence at 0.65 µm (⁴G_{5/2}→⁴H_{9/2}). Eu³⁺ ion emits fluorescence at 0.615 µm (⁵D₀→⁷F₂). Dy³⁺ ion emits fluorescent lights with wavelengths of 1.32 µm (⁶F_{11/2}→⁶H_{15/2}) and 1.75 µm (⁶H_{11/2}→ ⁶H_{15/2}). Ho³⁺ ion emits those of 1.18 µm (⁵I₆→⁵I₈), 1.45 µm (⁵F₅→⁵I₆), 1.50 µm (⁵F₄→⁵I₅), 1.65 µm (⁵I₅→⁵I₇) and 2.10 µm (⁵I₇→⁵I₈). Er³⁺ ion emits those of 0.98 µm (⁴I_{11/2}→⁴I_{15/2}), 1.55 µm (⁴I_{13/2}→⁴I_{15/2}), 1.70 µm (⁴I_{9/2}→⁴I_{13/2}) and 2.75 µm (⁴I_{11/2} → ⁴I_{13/2}). Tm³⁺ ion emits those of 1.20 µm (³H₅→³H₆), 1.45 µm (³H₄→³F₄) and 1.80 µm (³F₄→³H₆). Yb³⁺ ion emits fluorescence at 1.00 µm (²F_{5/2}→²F_{7/2}). Accordingly, a rare earth element may be selectively employed in an optical fiber depending on its specific waveband in a fluorescence spectrum.

Referring to Fig. 5, there is shown a diagram for illustrating a broadening mechanism of fluorescence spectrum due to a crystal structure. Each energy level of a rare earth ion in a free space is split into a plurality of Stark levels by the crystalline field within the crystal. Every level difference between two neighboring Stark levels increases in proportion to the intensity of the crystalline field. Each rare earth ion within a crystalline structure is located at a substantially consistent position within the crystal so that it may experience a uniform crystalline field. Accordingly, the Stark levels with consistent interlevel differences are generated so that narrow and sharp fluorescence spectrum may be obtained. If, however, rare earth ions are doped into an amorphous material, e.g., a glass, which basically has an non-crystalline structure, they experience various crystalline fields caused by the irregular structure. Consequently, the Stark levels of rare earth ions are diversely distributed in the amorphous material so that a full width half maximum(FWHM) of the fluorescence spectrum of a rare earth ion within the amorphous material may be broadened by the inhomogeneous broadening mechanism.

Generally, rare earth ions included in the amorphous material are excited by the photon absorption and emit stimulated emission of the signal beam. The light amplification phenomenon represents the increase of the total intensity of the signal beam caused by such stimulated emission. Exemplary rare earth element doped glass composition for the manufacture the optical fiber are as follows.

A silica glass is composed of an amorphous material of pure SiO₂ and, if necessary, may contain impurities below about 1 mole%. The solubility of a rare earth element in the pure SiO₂ with no impurities is about 0.01 mole%. If, however, Al₂O₃ of no more than about 0.5 mole% is added as an impurity, the solubility of the rare earth emement largely increases to 0.5. mole%. GeO₂, P₂O₅ and/or B₂O₃ may be employed instead of Al₂O₃. Al₂O₃, GeO₂, P₂O₅ and/or B₂O₃ in a ratio of about 0.01 mole% through about 0.1 mole% are typically added in the silica glass to control the solubility of the rare earth element and the refractive index of silica glass. The silica glass optical fiber may be manufactured by a modified chemical vapor deposition (MCVD), an outer vertical axially deposition (OVAD) and a plasma enhanced chemical vapor deposition (PECVD).

A silicate glass represents a glass in which impurities of more than about 0.1 mole% have been doped into the silica glass and it is generally used for an optical fiber and a planar optical waveguide. The glass network former, e.g., GeO₂, may be added in a ratio of about 0.1 mole% through about 25 mole% to formulate glass network, wherein GeO₂ has a tetrahedral structure similar to SiO₂. Instead of GeO₂, P₂O₅ and B₂O₃ may be added in a ratio of about 0.1 mole% through about 25 mole%. Alkaline metal oxide or alkaline earth metal oxide, e.g., Li₂O, Na₂O, CaO, MgO, BaO and ZnO, may be added in a ratio of about 0.1 mole% through about 30 mole% as a glass network modifier which functions to cut off the molecular binding in the tetrahedral structure. Al₂O₃, Ga₂O₃, PbO, Bi₂O₃ may be added in a ratio of about 0.1 mole% through about 25 mole% as a glass network intermediator which functions to reconnect the disconnected molecular binding in the glass network. As a representative flat silicate glass waveguide, a glass composition of 70 mole% of SiO₂, 15 mole% of Na₂O, 10 mole% of Al₂O₃ and 5 mole% of B₂O₃ may be used.

A tellurite glass, which contains both pure TeO₂ and impurities in a ratio of about 10 mole% through about 40 mole%, may be used in an optical fiber and a planar optical waveguide. Alkaline metal oxide or alkaline earth metal oxide, e.g., Li₂O, Na₂O, CaO, MgO, BaO and ZnO, may be added in a ratio of about 0.1 mole% through about 30 mole% as a glass network modifier which functions to disconnect the molecular binding in the tetrahedral structure. Al₂O₃, Ga₂O₃, PbO and Bi₂O₃ may be added in a ration of about 0.1 mole% through about 25 mole% as a glass network intermediator which functions to reconnect the disconnected molecular binding in the glass network. A glass composition of 70 mole% of TeO₂, 10 mole% of Na₂O, 5 mole% of GeO₂, 5 mole% of Bi₂O₃ and 5 mole% ZnO may be used as a representative tellurite optical fiber.

In sulfide glass, oxygen is replaced with sulfur as an element for a negative ion to form a glass network. GeS₂ glass, As₂S₃ glass and P₃S₅ glass are representatives of the sulfide glass. The sulfide glass may be easily formed not only in a stoichiometric composition range which is electrically neutral between positive ions and negative sulfur ions but also in an over-stoichiometry or under-stoichiometry state. Accordingly, the sulfide glass has a wider glass composition range than a conventional oxide glass. Since the sulfide glass has a still lower multiple phonon relaxation velocity than that of the oxide glass, the excited energy in the rare earth ion may be effectively converted into a photon energy so that the sulfide glass may be used as an excellent light amplification material. The complex composition for the sulfide glass network former results in enhanced thermal and chemical characteristics. For example, the Ge-As-S glass composition has a higher thermal stability and chemical resistance so that it may be effectively used to manufacture an optical fiber. The Ge-As-S glass composition in a ratio of 25 mole% of Ge, 10 mole% of As and 65 mole% of S is known to provide excellent thermal and chemical characteristics.

Although the solubility of rare earth elements in the sulfide glass is generally very low, it may be increased by doping Ga₂S₃. Accordingly, As-Ga-S, Ge-Ga-S and Ge-As-Ga-S glass composition including Ga₂S₃ in a ratio of 1 mole% through 30 mole% have been widely researched as the sulfide glass with rare earth ions. It has been reported that Al₂S₃ on behalf of Ga₂S₃ may be doped to increase the solubility of the rare earth elements. Especially, a glass composition of Ge₃₀As₈GaS₆₂, that is, 30 mole% of Ge, 8 mole% of As, 1 mole% of Ga and 62 mole% of S is a representative example of Ge-As-Ga-S glass composition which may be used to manufacture an optical fiber. Addition of at least one alkaline metal sulfide as a glass network modifier has been reported to provide enhanced viscosity and crystal characteristics. There have been published several reports for Na-Ga-S glass composition including Na₂S in a ratio of about 5 mole% through about 30 mole%. Li₂S or La₂S₃ may be used on behalf of Na₂S.

If an alkaline halogen complex is doped into the sulfide glass, the multiple phonon relaxation velocity of the rare earth ion is sharply dropped so that almost all excited energies may be converted into photon energies. MH-Ge-Ga-S or MH-Ge-As-Ga-S(M is Na, K, Cs or Rb and H is I or Br) sulfide glass composition including NaBr, NaI, KBr, KI, CsBr, CsI, RbBr or RbI as at least one alkaline halogen complex in a ratio of aobut 1 mole% through about 25 mole% may be used in order to reduce the multiple phonon relaxation velocity. For example, the fluorescence life time of Dy³⁺ ion doped into a glass composition with 70 mole% of GeS₂ and 30 mole% of GaS_{3/2} is 35 µs while the fluorescence life time of Dy³⁺ ion doped into a glass composition with 50 mole% of GeS₂, 20 mole% of AsS_{3/2}, 15 mole% of GaS_{3/2} and 15 mole% of CsBr increases to be 1860 µs. If Pr³⁺ ion is doped on behalf of Dy³⁺ ion, the fluorescence life time increases from 360 µs to 1800 µs.

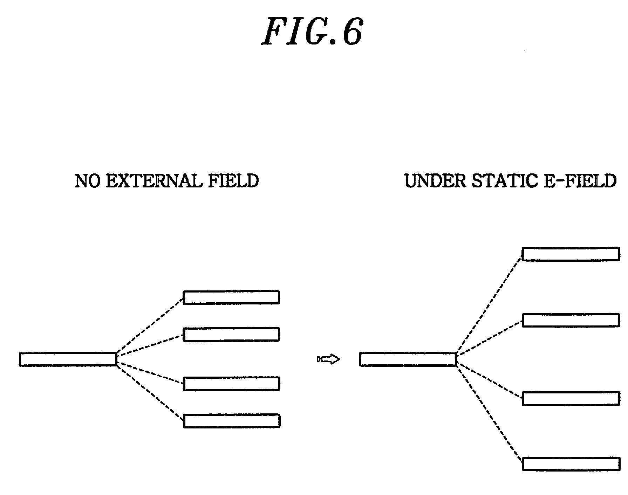

Referring to Fig. 6, there is illustrated a diagram for describing the relationship between an external electric field and the Stark levels. If the external electric field is applied in addition to any crystalline field which is intrinsic within any crystal or amorphous material, the effective crystalline field which the rare earth ion experiences may be modified. Positive ions, i.e., the rare earth ions, are attracted toward the negative electrode from the center of the crystalline field so that the effective crystalline field may be changed and, therefore, the Stark levels are shifted as shown in Fig. 6 so that the fluorescence spectrum generated by the transitions between every two Stark levels is also shifted.

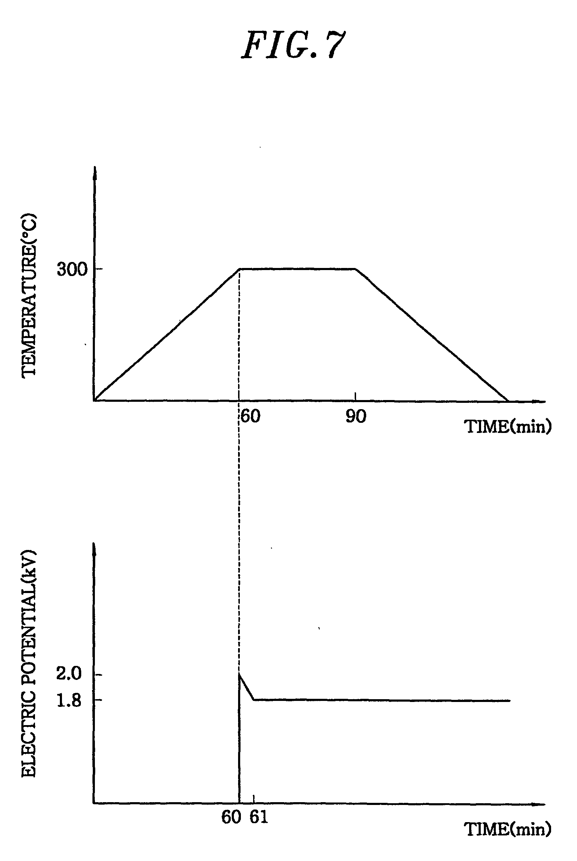

Referring to Fig. 7, there are shown graphs for illustrating temperature and applied voltage profiles drawn as a function of time for use in poling a glass composition or optical fiber including at least one rare earth element in accordance with the present invention. After the glass composition or optical fiber doped with Er³⁺ ion has been located in a poling apparatus, it is slowly heated for about 1 hour until a predetermined temperature, e.g., 300°C, is reached. After the predetermined temperature is reached, a voltage higher than a threshold voltage, e.g., 2.0 kV, is applied so that the surface leakage current may be detected. If the surface leakage current has been detected, a voltage in a range of about 80 % through about 95 % of the threshold voltage is kept applied. The predetermined temperature 300°C is maintained for about 30 more minutes. Thereafter, the optical fiber is slowly cooled down to room temperature. The constant voltage is maintained until the optical fiber is cooled down to room temperature. Since the voltage is maintained in the range of about 80 % through about 95% of the threshold voltage, the electric charges displaced at the higher temperature may remain there fixed at room temperature. Since the charges fixed on the surface induce the poling phenomenon, even after the removal of the external electric field, there will remain a strong residual electric field in the optical fiber.

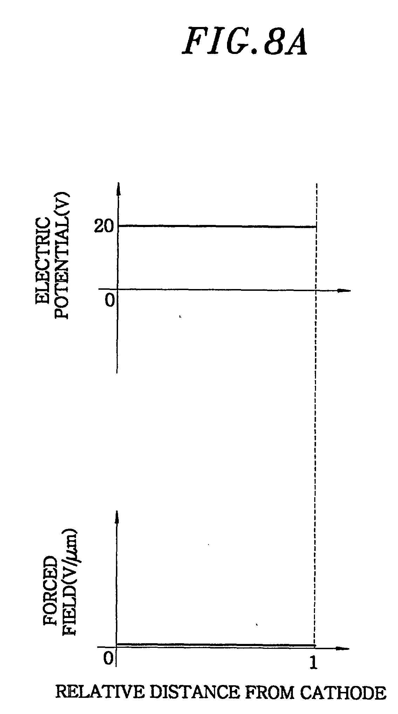

Referring to Figs. 8A to 8C, there are shown diagrams for illustrating the poling process induced by the movement of the electric charges in the glass composition or optical fiber in accordance with the present invention.

Referring to Fig. 8A, there are shown the voltage distribution and the electric field distribution as a function of the distance from the negative electrode before performing the poling process for the glass composition or optical fiber. Since the applied voltage is small and constant, the electric field remains to be almost 0.

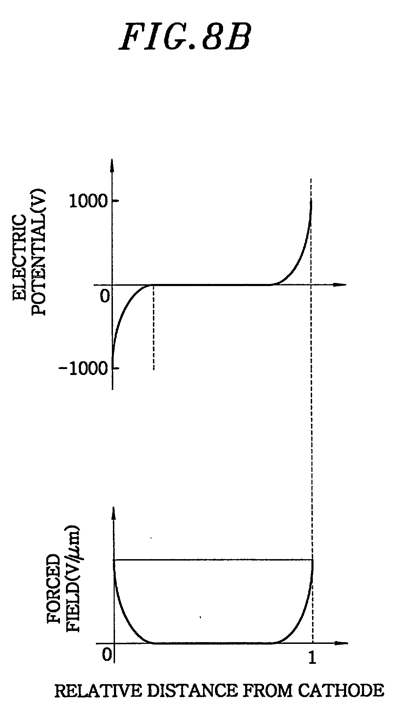

Referring to Fig. 8B, there are shown the voltage distribution and the electric field distribution in the glass composition or optical fiber during the poling process with a predetermined voltage applied while being heated to maintain a predetermined temperature. The voltage is rapidly dropped in the vicinity of the negative and the positive electrode and, therefore, the electric field is also rapidly changed in the vicinity of the negative and the positive electrode.

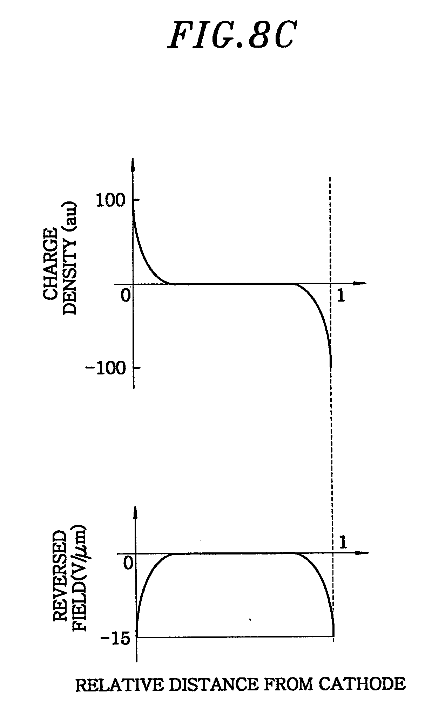

Referring to Fig. 8C, there are shown the charge density and the electric field of the glass composition or optical fiber after the poling process has been completed, wherein the external electric field has been removed and the temperature is dropped to room temperature. Since the mobility of the electric charges is rapidly dropped at room temperature, the rapidly changing charge distribution formed during the poling process in the vicinity of the negative and the positive electrode may be maintained even after the external electric field is removed; and, therefore, the rapidly changing electric fields at two opposite surfaces are maintained after the poling process.

The electric charge mobility is proportional to the temperature. If a strong electric field is applied at a high temperature, positive charges move toward the negative electrode while negative charges move toward the positive electrode. Since the positive charges are shifted to the surface of the negative electrode, a positive charge depletion layer may be formed within an area which is in contact with the negative electrode. At the same time, since the negative charges are shifted to the surface of the positive electrode, a negative charge depletion layer may be formed within an area which is in contact with the positive electrode.

Accordingly, the electric potential is sharply increased in the negative charge depletion layer around the positive electrode while the electric potential is sharply decreased in the positive charge depletion layer around the negative electrode. Since a strong polarization is formed within the area in which the electric potential rapidly changes, the Stark levels of the rare earth ions within the strong polarization area may be shifted to have greater intervals therebetween. Accordingly, the shifted Stark levels at two opposite surfaces of the optical fiber or glass composition in the vicinity of the positive and the negative electrode result in a large increase in the wavelength width of the fluorescence spectrum. In other words, such electric field distribution may result in a diverse intensity of the electric field which the rare earth ions have experienced in the vicinity of the positive and the negative electrode. The Stark level spectrums of the rare earth ions are superposed in the diverse electric field environment so that the waveband of the optical amplification is enlarged to be flat.

### Example 1

After a glass composition with 24 mole% of NaO, 75 mole% of SiO₂ and 1 mole% of Er₂O₃ was melted in a platinum crucible at 1600°C for 60 minutes in air, the melted composition was rapidly cooled by pouring onto a bronze mold to obtain a glass sample. The glass sample was cut into plates of a dimension of 15 mm x 15 mm x 1 mm. The surface of each glass sample was optically polished.

The glass sample was fixed in the poling apparatus for the flat sample shown in Fig. 1. After a voltage of 1000 V was applied to the glass sample at the temperature of 300°C for 30 minutes, the temperature of the glass sample was dropped to the room temperature.

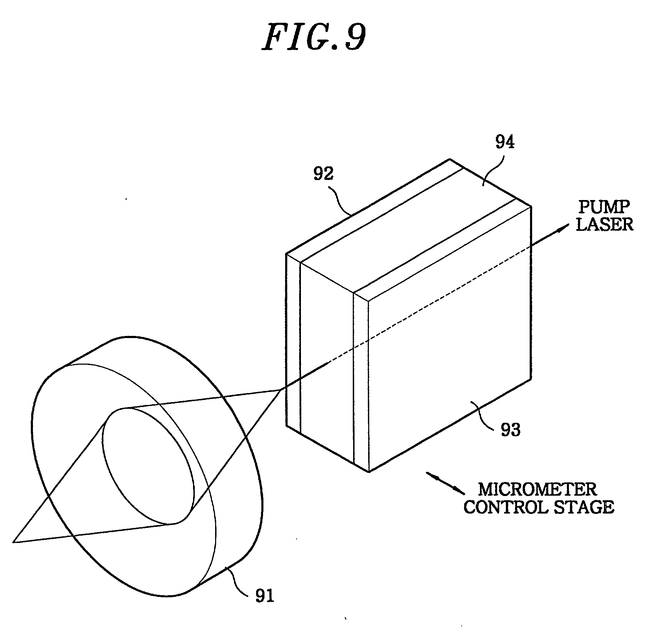

Referring to Fig. 9, there is shown a diagram for schematically illustrating a fluorescence detected from the glass sample in accordance with the present invention. After the titanium-sapphire laser beam with a wavelength of 800 nm was excited by an Ar⁺ laser, the excited laser beam was collected by the microscopic object lens 91 and the collected beam was sequentially introduced into three regions, i.e., an anode surface region 92 on which the positive electrode of the poling apparatus shown in Fig. 1 was disposed, a cathode surface region 93 on which the negative electrode of the poling apparatus was located and a central region 94, so that the fluorescence spectrum from each of the three regions of the glass sample could be measured. The emitted fluorescence was detected by using a diffraction lattice spectroscope and an InGaAs-PIN detector installed at a position located in the direction normal to the incident plane.

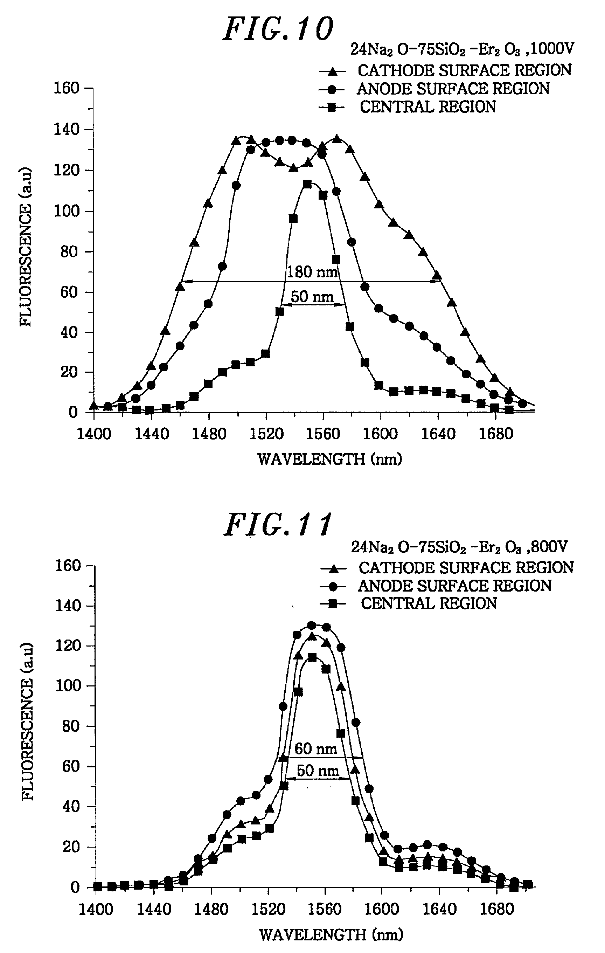

Referring to Fig. 10, there are shown graphs for illustrating fluorescence spectrums from the poled flat sample in accordance with the present invention. Data symbol ■ represents the fluorescence spectrum from the central region of the glass sample which is identical to the fluorescence spectrum for the non-poled glass sample. Data symbol ● represents the fluorescence spectrum detected at the anode surface region of the poled glass sample. Data symbol ▲ represents the fluorescence spectrum detected at the cathode surface region of the poled glass sample. The fluorescence spectrum at the cathode surface region of the poled glass sample has a FWHM of 180 nm, which is significantly larger than that, 50 nm, of the fluorescence spectrum of the non-poled glass sample.

### Example 2

After a glass composition of 24 mole% of NaO, 75 mole% of SiO₂ and 1 mole% of Er₂O₃ was melted at 1600°C for about 60 minutes in a platinum crucible, the melted composition was rapidly cooled by pouring onto a bronze mold to obtain a glass sample. The glass sample was cut into plates of a dimension of 15 mm x 15 mm x 1 mm and surfaces thereof were optically polished. The glass sample was fixed in the poling apparatus for the flat sample shown in Fig. 1. After a voltage of 800 V was applied to the glass sample at a temperature of 300°C for 30 minutes, the temperature of the glass sample was independently dropped to the room temperature. The applied voltage 800 V used in this example is substantially lower than 1000 V of the previous example.

After a 800 nm titanium-sapphire laser beam was excited by an Ar⁺ laser as shown in Fig. 9, the excited laser beam was collected by the microscopic object lens 91 and the collected beam was sequentially introduced into three regions, i.e., the anode surface region 92, the cathode surface region 93 and the central region 94 to measure the fluorescence spectrum of the glass sample. The emitted fluorescence was detected by using a diffraction lattice spectroscope and an InGaAs-PIN detector installed at a position located in the direction normal to the incident plane.

Referring to Fig. 11, there are shown graphs for illustrating fluorescence spectrums from the flat sample, which has not been completely poled. Data symbol ■ represents the fluorescence spectrum for the central region of the glass sample which is identical to the fluorescence spectrum for the non-poled glass sample. Data symbol ● represents the fluorescence spectrum detected at the anode surface region of the poled glass sample. Data symbol ▲ represents the fluorescence spectrum detected at the cathode surface region of the poled glass sample. The fluorescence spectrum at the anode surface region of the poled glass sample has a FWHM of 60 nm, which is slightly larger than that, 50 nm, of the fluorescence spectrum of the non-poled glass sample. The comparative spectrum curves shown in Figs 10 and 11 demonstrate the effectiveness of the poling process in the increment of the fluorescence spectrum.

### Example 3

After a glass composition with 24 mole% of PbO, 75 mole% of SiO₂ and 1 mole% of Er₂O₃ was melted at 1500°C for 30 minutes in a platinum crucible, the melted composition was rapidly cooled by pouring onto a bronze mold to obtain a glass sample. The glass sample was cut into plates of a dimension of 15 mm x 15 mm x 1 mm and surfaces thereof were optically polished. The glass sample was fixed in the poling apparatus for the flat sample shown in Fig. 1. After a voltage of 1800 V was applied to the glass sample at 300°C for 30 minutes, the temperature of the glass sample was dropped to the room temperature.

After an 800 nm titanium-sapphire laser beam was excited by an Ar⁺ laser as shown in Fig. 9, the excited laser beam is collected by the microscopic object lens 91 and the collected beam was sequentially introduced into three regions, i.e., an anode surface region 92 on which the positive electrode of the poling apparatus shown in Fig. 1 was disposed, a cathode surface region 93 on which the negative electrode of the poling apparatus was located and the central region 94 to measure the fluorescence spectrum from each of the three regions of the glass sample. The emitted fluorescence was detected by using a diffraction lattice spectroscope and an InGaAs-PIN detector installed at a position located in the direction normal to the incident plane.

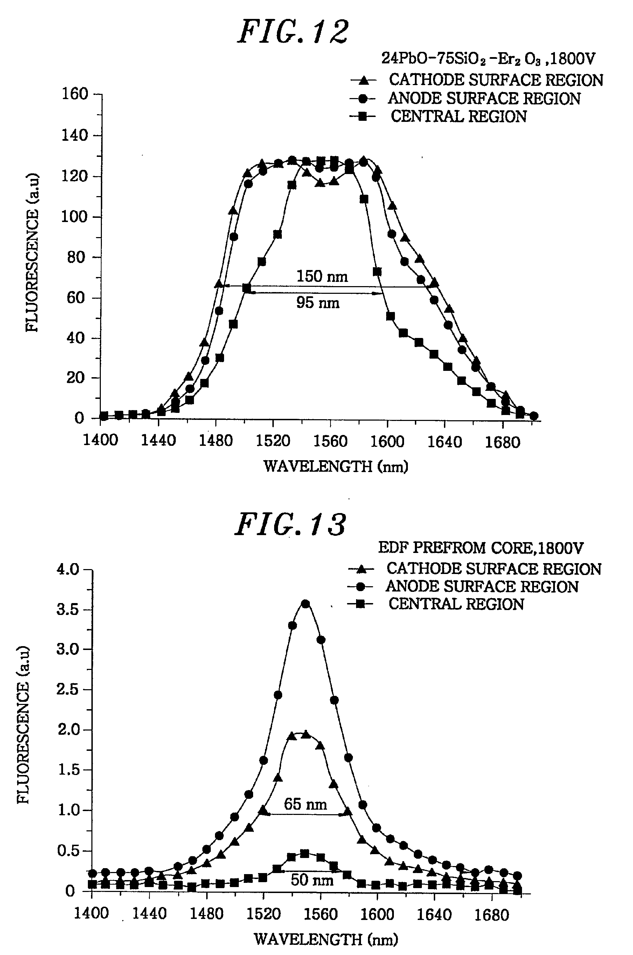

Referring to Fig. 12, there are shown graphs for illustrating fluorescence spectrums from the poled flat sample in accordance with the present invention. Data symbol ■ represents the fluorescence spectrum from the central region of the glass sample which is identical to the fluorescence spectrum for the non-poled glass sample. data symbol ● represents the fluorescence spectrum detected at the anode surface region of the poled glass sample. Data symbol ▲ represents the fluorescence spectrum detected at the cathode surface region of the poled glass sample. The fluorescence spectrum at the cathode surface region of the poled glass sample has a FWHM of 150 nm, which is much larger than that, 95 nm, of the fluorescence spectrum of the non-poled glass sample.

### Example 4

A modified chemical vapor deposition (MCVD) had been used to manufacture an optical preform which was comprised of a core of a glass composition with 99.2 mole% of SiO₂, 0.5 mole% of Al₂O₃, 0.2 mole% of GeO₂ and 0.2 mole% of Er₂O₃ and a cladding of SiO₂. The optical preform was cut into sample plates of a dimension of 15 mm x 15 mm x 1 mm and surfaces thereof were optically polished. The sample was fixed in the poling apparatus shown in Fig. 3. After a voltage of 1800 V was applied to the glass sample at 300°C for 30 minutes, the temperature of the sample was dropped to the room temperature.

After an 800 nm titanium-sapphire laser beam was excited by an Ar⁺ laser as shown in Fig. 9, the excited laser beam was collected by the microscopic object lens 91 and the collected beam was sequentially introduced into three regions, i.e., the anode surface region 92, the cathode surface region 93 and the central region 94 to measure the fluorescence spectrum of the glass sample. The emitted fluorescence was detected by using a diffraction lattice spectroscope and an InGaAs-PIN detector installed at a position in the direction normal to the incident plane.

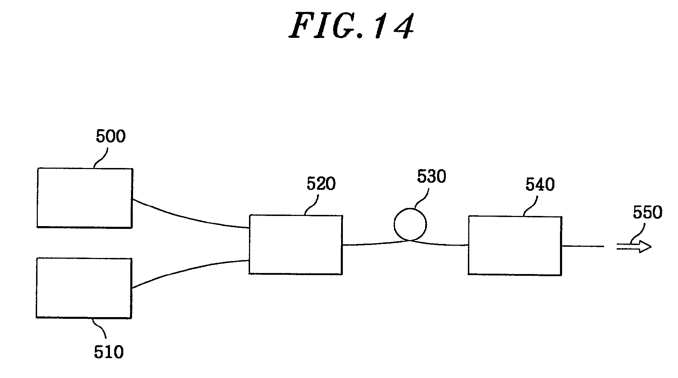

Referring to Fig. 13, there are shown graphs for illustrating fluorescence spectrums from the poled flat sample. Data symbol ■ represents the fluorescence spectrum for the central region of the glass sample which is identical to the fluorescence spectrum for the non-poled glass sample. Data symbol ● represents the fluorescence spectrum detected at the anode surface region of the poled glass sample. Data symbol ▲ represents the fluorescence spectrum detected at the cathode surface region of the poled glass sample. The fluorescence spectrum at the cathode surface region of the poled glass sample has a FWHM of 65 nm, which is slightly larger than that, 50 nm, of the fluorescence spectrum of the non-poled glass sample. At the neighbor of the maximum fluorescence, the spectrum was slightly flattened.

Fig. 14 schematically shows an embodiment of an apparatus for performing optical communications using the wide-band optical waveguide amplifier in accordance with the present invention. The wide-band optical waveguide amplifier in accordance with the present invention includes a signal source 500 for generating a optical signal, a laser source 510 for generating a optical pumping, a dispersive coupler 520 for supplying light to an optical fiber 530, wherein the optical fiber 530 includes a poled glass composition doped with Er³⁺ ion to perform light amplification, and a means 540 for preventing a light 550 emitted from the optical fiber 530 from being reflected back to the optical fiber 530. Preferably, the optical signal supplied from the signal source 500 and the optical pumping supplied from the laser source 510 are united and coupled in the dispersive coupler 520. The united and coupled light is supplied to the optical fiber 530.

While the invention has been shown and described with respect to the preferred embodiments, it will be understood by those skilled in the art that various changes and modifications may be made without departing from the scope of the invention as defined in the following claims.

## Claims

1. A wide-waveband optical waveguide amplifier, comprising:
rare earth ions; and
an optical medium for containing the rare earth ions, wherein the optical medium is poled to expand a waveband width of a fluorescent spectrum of the rare earth ions.

2. The wide-waveband optical waveguide amplifier of claim 1, wherein the rare earth ions include at least one ion selected from a group consisting of Er³⁺, Tm³⁺, Nd³⁺, Pr³⁺, Dy³⁺, Ho³⁺ and Eu³⁺.

3. The wide-waveband optical waveguide amplifier of claim 1, wherein the optical medium is made of at least one material selected from a group of silica glass, silicate glass, tellurite glass and sulfide glass.

4. The wide-waveband optical waveguide amplifier of claim 3, wherein the silicate glass and the tellurite glass include at least one glass network former selected from a group of GeO₂, P₂O₅ and B₂O₃.

5. The wide-waveband optical waveguide amplifier of claim 3, wherein the silicate glass and the tellurite glass include at least one glass network intermediator selected from a group of Al₂O₃, Ga₂O₃, PbO, Bi₂O₃.

6. The wide-waveband optical waveguide amplifier of claim 3, wherein the silicate glass and the tellurite glass include at least one glass network modifier selected from a group of Li₂O, Na₂O, K₂O, CaO, MgO, BaO and ZnO.

7. The wide-waveband optical waveguide amplifier of claim 3, wherein the sulfide glass includes at least one glass network former selected from a group of GeS₂, As₂S₃, P₂O₅ and B₂S₃.

8. The wide-waveband optical waveguide amplifier of claim 3, wherein the sulfide glass includes at least one glass network intermediater selected from a group of Al₂S₃ and Ga₂S₃.

9. The wide-waveband optical waveguide amplifier of claim 3, wherein the sulfide glass includes at least one glass network modifier selected from a group of Li₂S and Na₂S.

10. The wide-waveband optical waveguide amplifier of claim 3, wherein the sulfide glass includes at least one alkaline halogen compound selected from a group of NaBr, NaI, KBr, KI, CsBr, CsI, RbBr and RbI to decrease a multiple phonon relaxation velocity.

11. The wide-waveband optical waveguide amplifier of claim 1, wherein the wide-waveband optical waveguide amplifier is made of an optical fiber or a flat optical amplifier.

12. A method for manufacturing a wide-waveband optical waveguide amplifier which includes an optical medium having rare earth ions therein, comprising the steps of:
heating the optical medium to a predetermined temperature;
applying a predetermined voltage to an optical channel of the optical medium in the direction normal to an optical path for a predetermined time while maintaining the predetermined temperature maintained; and
cooling the optical medium to the room temperature.

13. The method of claim 12, wherein the rare earth ions include at least one ion selected from a group of Er³⁺, Tm³⁺, Nd³⁺, Pr³⁺, Dy³⁺, Ho³⁺ and Eu³⁺.

14. The method of claim 13, wherein the optical medium includes at least one material selected from a group of silica glass, silicate glass, tellurite glass and sulfide glass.
